# EUROPEAN PATENT SPECIFICATION

(11) **EP 2 835 082 B1**
(45) Date of publication and mention of the grant of the patent: **29.04.2020**
(21) Application number: 13772100.7
(22) Date of filing: 03.04.2013
(51) Int. Cl.: A47L 1/02, A47L 1/05, F16B 47/00

(54) **SUCTION APPARATUS HAVING SUCTION CUP AND GLASS-WIPING DEVICE THEREOF**
SAUGVORRICHTUNG MIT SAUGNAPF UND GLASWISCHVORRICHTUNG DAFÜR
APPAREIL D'ASPIRATION AYANT UNE VENTOUSE ET SON DISPOSITIF D'ESSUIE-VITRE

(30) Priority: 05.04.2012 CN 201210097471
(43) Date of publication of application: 11.02.2015
(73) Proprietor: ECOVACS ROBOTICS CO.,LTD., Wuzhong District Suzhou Jiangsu 215168 (CN)
(72) Inventor: LV, Xiaoming, Suzhou Jiangsu 215168 (CN)
(74) Representative: Becker & Kurig Partnerschaft Patentanwälte PartmbB
(86) International application number: PCT/CN2013/073697
(87) International publication number: WO 2013/149583

(56) References cited:
- EP-A2- 0 407 745
- WO-A1-2008/009614
- WO-A1-2008/123692
- CN-U- 202 493 561
- CN-U- 202 515 582
- CN-U- 202 673 965
- CN-U- 202 843 501
- CN-Y- 201 286 670
- DE-A1- 2 723 616
- DE-A1-102009 017 685
- JP-A- H0 324 311
- JP-A- H0 584 160
- JP-A- 2011 062 678

## Description

### Field of the Invention

The present invention relates to the technical field of manufacturing of small household electrical appliances, and particularly, relates to a suction apparatus with a suction cup and a glass-wiping device thereof.

### Background of the prior art

Conventional glass-wiping device, such as a glass-wiping robot, can perform work by sucking onto a glass via a suction unit. Common suction unit includes a suction cup fixed at the bottom of the glass-wiping device. If the suction cup is made of soft materials, such as rubber, silica gel, etc., these elastic materials can enable the machine to have well suction. However, since these materials have a larger friction coefficient, the glass-wiping devices often fail to overcome the larger friction force between the suction cup and the glass, resulting in that the glass-wiping devices fail to walk or to run smoothly, and the performances of the glass-wiping device are affected. For instance, WO2008009614A1 and DE102009017685A1 respectively disclose a glass-wiping device and a suction apparatus. The suction apparatuses in both of the documents have a suction cup provided with a flexible layer to provide suction.

An example of a robotic device with vacuum cups is given in US2003/0048081 A1.

An example relating to cups in general is given in CN202082262U.

### Summary of the Invention

It is a technical objective of the present invention to provide a glass-wiping device to overcome the deficiencies in the prior art. The disclosed glass-wiping device not only has a simplified structure but also can generate sufficient suction force, such that the glass-wiping device is effectively prevented from falling off the glass while working.

To solve the above technical problems, the present invention adopts the following technical solution:
A glass-wiping device comprises a suction apparatus, a cleaning unit, a driver unit, a running unit and a control unit. The running unit and the cleaning unit are both arranged at the bottom of the glass-wiping device. The control unit is respectively connected to the cleaning unit and to the driver unit. Under an action of the control unit, the driver unit controls the running unit to run. The glass-wiping device sucks onto the surface of a glass via the suction apparatus. The suction apparatus comprises a suction cup. The suction cup comprises a flexible layer and a thin-film layer having a plane lower surface connected to each other. The flexible layer is connected to the bottom of the glass-wiping device. The thin-film layer is configured to contact and seal the surface of the glass.

On the basis of the above technical solution, the present invention may further adopt the following technical solutions to address the technical problems to be solved:
The flexible layer may be made of rubber or silica gel.

Further, a material of the thin-film layer may have a friction coefficient smaller than that of a material of the flexible layer.

Further, the thin-film layer may be a plastic film.

Further, a material of the plastic film may be Polyethylene.

Further, the plastic film may have a thickness of 0.08∼0.12mm.

Further, the suction apparatus may also comprise a gas-guide tube and a vacuum pump, the vacuum pump being connected to the suction cup arranged at the bottom of the glass-wiping device via the gas-guide tube.

Still further, under a natural state, a height of the suction cup protruding over the bottom surface of the glass-wiping device is higher, by a distance d, than a height of the running unit protruding over the bottom surface of the glass-wiping device, wherein the distance d may be 0.5∼1mm. The natural state refers to the state where the pressure generated by the glass-wiping device on the glass is zero.

The present invention also provides a suction apparatus with a suction cup, the suction cup comprising a flexible layer and a thin-film layer, the thin-film layer being arranged on a surface of the flexible layer, and the suction cup having a sealing suction onto a surface via the thin-film layer.

Compared to the existing glass-wiping devices, the present invention has the following beneficial effects: since the suction cup adopts the structure of a flexible layer and a thin-film layer, and the thin-film layer close contacts and seals the surface of a glass, the glass-wiping device of the present invention during working is capable of not only securely affixing the suction unit onto the glass, but also running smoothly due to the smaller friction force between the thin-film layer and the glass. When the glass-wiping device meets small bumps during the running, the thin-film layer readily deforms to avoid leakage in a negative pressure chamber of the suction cup, such that the glass-wiping device is effectively prevented from falling off the glass while working.

### Brief Description of the Drawings

Figure 1 is a schematic illustration of the glass-wiping device of the present invention in the natural state;
Figure 2 is a schematic illustration of the glass-wiping device of the present invention in the working state;
Figure 3 is a schematic illustration of the structure of the glass-wiping device in accordance with the present invention;
Figure 4 is a schematic illustration of the control of the glass-wiping device in accordance with the present invention.

**Description of reference numbers in the figures:**

| | | |
|---|---|---|
| 1. suction apparatus | 2. running unit | 3. cleaning unit |
| 4. driver unit | 5. control unit | 6. glass |
| 8. glass-wiping device | 9. flexible layer | 10. thin-film layer |
| 11. suction cup | 12. gas-guide tube | 13. vacuum pump |

### Detailed Description of Embodiments

The technical solutions of the present invention are further described at below with reference to the figures and embodiments.

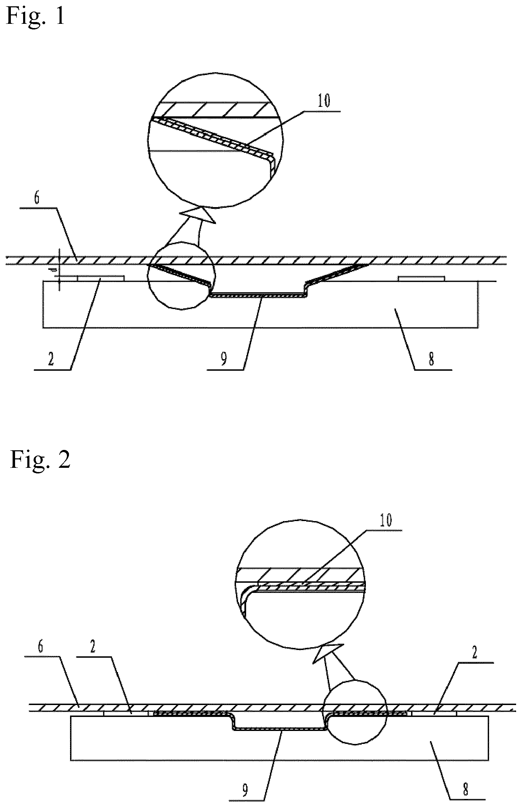

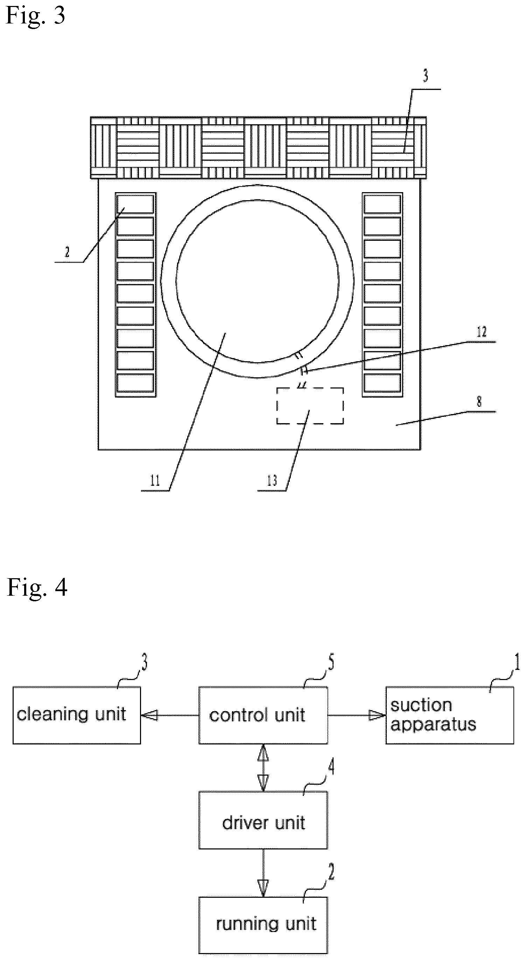

Fig. 1 is a schematic illustration of the glass-wiping device in the natural state in accordance with the present invention; Fig. 2 is a schematic illustration of the glass-wiping device in the working state in accordance with the present invention; Fig. 3 is a schematic illustration of the structure of the glass-wiping device in accordance with present invention.

As shown in Figs. 1-2, a glass-wiping device 8 of the present invention comprises a suction apparatus, a cleaning unit, a driver unit, a running unit and a control unit. The running unit and the cleaning unit are both arranged at the bottom of the glass-wiping device. The control unit is respectively connected to the cleaning unit and to the driver unit. Under an action of the control unit, the driver unit controls the running unit to run. The glass-wiping device 8 sucks onto the surface of a glass via the suction apparatus 1. The suction apparatus comprises a suction cup 11. The suction cup 11 comprises a flexible layer 9 and a thin-film layer 10 having a plane lower surface connected to each other. The flexible layer 9 is connected to the bottom of the glass-wiping device. The thin-film layer 10 is configured to contact and seal the surface of a glass 6.

In this embodiment, the preferred material of the flexible layer 9 is rubber or silica gel; a material of the thin-film layer 10 has a friction coefficient smaller than that of a material of the flexible layer 9; the material of the thin-film layer 10 may preferably be a plastic film, such as polyethylene film; the thickness of the plastic film is preferably controlled between 0.08∼0.12mm. Certainly, the flexible layer 9 and the thin-film layer 10 can be made of various kinds of suitable materials in the prior art. For example, the thin-film layer 10 may also be made of polyester film, nylon film, and so on, and the plastic film may also be made of polyvinyl chloride, polypropylene and polystyrene, etc. Other suitable materials not listed herein may also be used by the present invention.

As shown in Fig. 3, in order to enable the suction cup 11 to generate sufficient suction force, the suction apparatus 1 in the present invention also comprises a gas-guide tube 12 and a vacuum pump 13, the vacuum pump 13 being connected to the suction cup 11 arranged at the bottom of the glass-wiping device via the gas-guide tube 12.

As shown in Fig. 4, the glass-wiping device 8 of the present invention comprises a running unit 2, a cleaning unit 3, a driver unit 4 and a control unit 5. The running unit 2 and the cleaning unit 3 are respectively arranged at the bottom of the glass-wiping device 8. The control unit 5 is respectively connected to the cleaning unit 3 and to the driver unit 4. Under an action of the control unit 5, the driver unit 4 controls the running unit 2 to run. It needs to state that, the running unit 2, the cleaning unit 3, the driver unit 4 and the control unit 5 may use technologies in the prior art, and thus unnecessary details will not be described herein.

As shown in Fig. 1, when the glass-wiping device is in the natural state, the height of the suction cup 11 protruding over the bottom surface of the glass-wiping device is higher, by a distance d, than the height of the running unit 2 (for example, a crawler belt) protruding over the bottom surface of the glass-wiping device, the natural state referring to the state where the pressure generated by the glass-wiping device on the glass is zero. The distance d is generally determined by the deformation extent of the flexible layer, and it is preferable in the present invention that the d is 0.5∼1mm.

During the working of the glass-wiping device, by the vacuum pump 13 pumping out air within the suction cup 11, a chamber inside the suction cup 11 generates a negative pressure, the pressure generated by the inside and outside pressure difference allows the suction cup 11 to deform, so that the thin-film layer 10 completely sucks and affixes onto the glass 6. The distance d between the running unit 2 (for example, a crawler belt) and the glass gradually becomes smaller and then vanishes, the positive pressure generated by the crawler belt on the glass 6 gradually becomes larger and in turn generates sufficient driving force to overcome the friction force between the suction cup and the glass, and thus allows the robot to run smoothly. Since the material of the thin-film layer 10 has a friction coefficient smaller than that of the material of the flexible layer 9, the friction force between the glass-wiping device and the glass when the glass-wiping device moves can be effectively reduced; moreover, since the thickness of the thin-film layer 10 is very small (generally in mm level), the thin-film layer 10 is only protruded at the positions corresponding to small bumps on the surface of the glass when meeting the small bumps, and its remaining positions still affix the surface of the glass. Thus, the suction cup can be effectively prevented from leakage or failure.

In the suction apparatus provided by the present invention, the combination structure of the flexible layer 9 and the thin-film layer 10 for the suction cup can effectively suck onto and move on the vertical wall surface or glass surface, which thus is applicable to various cleaning devices for vertical surface.

The embodiments of the present invention are illustrated hereinbefore. However, the glass-wiping device of the present invention is not limited to these embodiments.

## Claims

1. A glass-wiping device (8), comprising a suction apparatus (1), a cleaning unit (3), a driver unit (4), a running unit (2) and a control unit (5), the running unit (2) and the cleaning unit (3) being both arranged at the bottom of the glass-wiping device (8), the control unit (5) being connected to the driver unit (4), the driver unit (4) controlling the running unit (2) to run under an action of the control unit (5), the glass-wiping device (8) sucking onto a surface of a glass (6) via the suction apparatus (1), and the suction apparatus (1) comprising a suction cup (11), wherein the suction cup (11) comprises a flexible layer (9), and the glass-wiping device (8) is **characterized in that**,
the suction cup (11) further comprises a thin-film layer (10) connected to the flexible layer (9), the flexible layer (9) is connected to the bottom of the glass-wiping device (8), and the thin-film layer (10) has a plane lower surface and is for use in contacting and sealing the surface of the glass (6).

2. The glass-wiping device (8) of claim 1, **characterized in that**, the flexible layer (9) is made of rubber or silica gel.

3. The glass-wiping device (8) of claim 2, **characterized in that**, a material of the thin-film layer (10) has a friction coefficient smaller than a friction coefficient of a material of the flexible layer (9).

4. The glass-wiping device (8) of claim 2, **characterized in that**, the thin-film layer (10) is a plastic film.

5. The glass-wiping device (8) of claim 4, **characterized in that**, a material of the plastic film is Polyethylene.

6. The glass-wiping device (8) of claim 5, **characterized in that**, the plastic film has a thickness of 0.08 ∼ 0.12mm.

7. The glass-wiping device (8) of claim 2, **characterized in that**, the suction apparatus (1) further comprises a gas-guide tube (12) and a vacuum pump (13), the vacuum pump (13) being connected to the suction cup (11) at the bottom of the glass-wiping device (8) via the gas-guide tube (12).

8. The glass-wiping device (8) of any of claims 1-7, **characterized in that**, under a natural state, a height of the suction cup (11) protruding over the bottom surface of the glass-wiping device (8) is higher, by a distance d, than a height of the running unit (2) protruding over the bottom surface of the glass-wiping device (8).

9. The glass-wiping device (8) of claim 8, **characterized in that**, the distance d is 0.5∼1mm.

## Patentansprüche

1. Glaswischvorrichtung (8), umfassend eine Saugeinrichtung (1), eine Reinigungseinheit (3), eine Antriebseinheit (4), eine Laufeinheit (2) und eine Steuereinheit (5), wobei
die Laufeinheit (2) und die Reinigungseinheit (3) beide am Boden der Glaswischvorrichtung (8) angeordnet sind, wobei die Steuereinheit (5) mit der Antriebseinheit (4) verbunden ist, wobei die Antriebseinheit (4) die Laufeinheit (2) steuert, um gemäß einer Wirkung der Steuereinheit (5) zu laufen, wobei die Glaswischvorrichtung (8) über die Saugeinrichtung (1) an eine Glasoberfläche (6) ansaugt und die Saugeinrichtung (1) einen Saugnapf (11) umfasst, wobei der Saugnapf (11) eine flexible Schicht (9) umfasst und die Glaswischvorrichtung (8) **dadurch gekennzeichnet ist, dass**
der Saugnapf (11) ferner eine Dünnfilmschicht (10) umfasst, die mit der flexiblen Schicht (9) verbunden ist, wobei die flexible Schicht (9) mit dem Boden der Glaswischvorrichtung (8) verbunden ist und die Dünnfilmschicht (10) eine flache unter Oberfläche aufweist und zum Berühren und Abdichten der Glasoberfläche (6) ausgelegt ist.

2. Glaswischvorrichtung (8) nach Anspruch 1, **dadurch gekennzeichnet, dass** die flexible Schicht (9) aus Gummi oder Silikagel hergestellt ist.

3. Glaswischvorrichtung (8) nach Anspruch 2, **dadurch gekennzeichnet, dass** ein Material der Dünnfilmschicht (10) einen Reibungskoeffizienten aufweist, der geringer ist als ein Reibungskoeffizient eines Materials der flexiblen Schicht (9).

4. Glaswischvorrichtung (8) nach Anspruch 2, **dadurch gekennzeichnet, dass** die Dünnfilmschicht (10) ein Kunststofffilm ist.

5. Glaswischvorrichtung (8) nach Anspruch 4, **dadurch gekennzeichnet, dass** ein Material des Kunststofffilms Polyethylen ist.

6. Glaswischvorrichtung (8) nach Anspruch 5, **dadurch gekennzeichnet, dass** der Kunststofffilm eine Stärke von 0, 08∼0,12 mm aufweist.

7. Glaswischvorrichtung (8) nach Anspruch 2, **dadurch gekennzeichnet, dass** die Saugeinrichtung (1) ferner eine Gasführungsleitung (12) und eine Vakuumpumpe (13) umfasst, wobei die Vakuumpumpe (13) am Boden der Glaswischvorrichtung (8) über die Gasführungsleitung (12) mit dem Saugnapf (11) verbunden ist.

8. Glaswischvorrichtung (8) nach einem der Ansprüche 17, **dadurch gekennzeichnet, dass** im Normalzustand eine Höhe des Saugnapfes (11), die über die Bodenoberfläche der Glaswischvorrichtung (8) vorsteht, um einen Abstand d größer ist als eine Höhe der Laufeinheit (2), die über die Bodenfläche der Glaswischvorrichtung (8) vorsteht.

9. Glaswischvorrichtung (8) nach Anspruch 8, **dadurch gekennzeichnet, dass** der Abstand d 0,5∼1 mm beträgt.

## Revendications

1. Dispositif d'essuie-vitre (8), comprenant un appareil d'aspiration (1), une unité de nettoyage (3), une unité d'entraînement (4), une unité de fonctionnement (2) et une unité de commande (5), l'unité de fonctionnement (2) et l'unité de nettoyage (3) étant toutes deux disposées au fond du dispositif d'essuie-vitre (8), l'unité de commande (5) étant reliée à l'unité d'entraînement (4), l'unité d'entraînement (4) commandant l'unité de fonctionnement (2) pour fonctionner sous une action de l'unité de commande (5), le dispositif d'essuie-vitre (8) aspirant sur une surface d'une vitre (6) par l'intermédiaire de l'appareil d'aspiration (1), et l'appareil d'aspiration (1) comprenant une ventouse (11), la ventouse (11) comprenant une couche souple (9) et le dispositif d'essuie-vitre (8) étant **caractérisé en ce que**,
la ventouse (11) comprend en outre une couche de film mince (10) reliée à la couche souple (9), la couche souple (9) étant reliée au fond du dispositif d'essuie-vitre (8), et la couche de film mince (10) ayant une surface inférieure plane et étant destinée
à être utilisée pour entrer en contact avec et fermer de façon étanche la surface de la vitre (6).

2. Dispositif d'essuie-vitre (8) selon la revendication 1, **caractérisé en ce que** la couche souple (9) est en caoutchouc ou en gel de silice.

3. Dispositif d'essuie-vitre (8) selon la revendication 2, **caractérisé en ce qu'**un matériau de la couche de film mince (10) a un coefficient de frottement inférieur à un coefficient de frottement d'un matériau de la couche souple (9).

4. Dispositif d'essuie-vitre (8) selon la revendication 2, **caractérisé en ce que** la couche de film mince (10) est un film plastique.

5. Dispositif d'essuie-vitre (8) selon la revendication 4, **caractérisé en ce qu'**un matériau du film plastique est le polyéthylène.

6. Dispositif d'essuie-vitre (8) selon la revendication 5, **caractérisé en ce que** le film plastique a une épaisseur de 0,08 ^{∼} 0, 12 mm.

7. Dispositif d'essuie-vitre (8) selon la revendication 2, **caractérisé en ce que** l'appareil d'aspiration (1) comprend en outre un tube de guidage de gaz (12) et une pompe à vide (13), la pompe à vide (13) étant reliée à la ventouse (11) au fond du dispositif d'essuie-vitre (8) par l'intermédiaire du tube de guidage de gaz (12).

8. Dispositif d'essuie-vitre (8) selon l'une quelconque des revendications 1 à 7, **caractérisé en ce que**, à l'état naturel, une hauteur de la ventouse (11) faisant saillie de la surface inférieure du dispositif d'essuie-vitre (8) est supérieure, d'une distance d, à une hauteur de l'unité de fonctionnement (2) faisant saillie de la surface inférieure du dispositif d'essuie-vitre (8).

9. Dispositif d'essuie-vitre (8) selon la revendication 8, **caractérisé en ce que** la distance d est de 0, 5 ^{∼} 1 mm.
